(19) **Europäisches Patentamt**
**European Patent Office**
**Office européen des brevets**

(11) **EP 2 179 264 B1**

(12) # FASCICULE DE BREVET EUROPEEN

(45) Date de publication et mention de la délivrance du brevet:
**19.10.2011 Bulletin 2011/42**

(51) Int Cl.:
**G01N 3/317** *(2006.01)*          **H02K 41/00** *(2006.01)*
**H02K 41/02** *(2006.01)*

(21) Numéro de dépôt: **08827914.6**

(22) Date de dépôt: **22.08.2008**

(86) Numéro de dépôt international:
**PCT/FR2008/051520**

(87) Numéro de publication internationale:
**WO 2009/024733 (26.02.2009 Gazette 2009/09)**

(54) **DISPOSITIF MOTEUR DESTINE A APPLIQUER UNE IMPULSION MAGNETIQUE A UN ENSEMBLE MECANIQUE, ET DISPOSITIF D'EJECTION D'EMPORT D'AERONEF EN COMPORTANT APPLICATION**

ANTRIEBSVORRICHTUNG ZUM ANLEGEN EINES MAGNETIMPULS AN EINE MECHANISCHE ANORDNUNG UND FLUGZEUG MIT AUSSTOSSVORRICHTUNG DAMIT

DRIVING DEVICE FOR APPLYING A MAGNETIC PULSE TO A MECHANICAL ASSEMBLY AND AIRCRAFT CARRYING EJECTION DEVICE IMPLEMENTING SAME

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.08.2007 FR 0757138**

(43) Date de publication de la demande:
**28.04.2010 Bulletin 2010/17**

(73) Titulaires:
• **ALKAN**
  **94460 Valenton (FR)**
• **Institut Franco-Allemand de Recherches de Saint-Louis**
  **68300 Saint-Louis (FR)**

(72) Inventeurs:
• **DERKSEMA, Jean-Jacques**
  **F-49150 Saint Quentin Les Beaurepaire (FR)**
• **STERZELMEIER, Klaus**
  **79379 Müllheim/Feldberg (DE)**

(74) Mandataire: **Colas, Jean-Pierre**
**Cabinet Lavoix**
**2, Place d'Estienne d'Orves**
**75441 Paris Cedex 09 (FR)**

(56) Documents cités:
**EP-A- 0 788 853      WO-A-99/19972**
**FR-A- 2 876 796      GB-A- 190 120 935**

EP 2 179 264 B1

## Description

La présente invention concerne un dispositif moteur destiné à appliquer une impulsion de mouvement à haute énergie à un organe mécanique. Plus particulièrement, l'invention est relative à des dispositifs de ce genre dans lesquels l'énergie appliquée est de nature électromagnétique.

Dans divers domaines de la technique, il peut être nécessaire de pouvoir appliquer d'une façon contrôlée une impulsion de très forte énergie à un organe mécanique. On peut citer à titre d'exemple de tels domaines, la recherche fondamentale sur les matériaux en ce qui concerne leur comportement en cas de choc violent ou l'avionique, domaine dans lequel il peut être nécessaire de séparer très brusquement d'une aile d'avion un emport tel qu'un missile suspendu à un pylône fixé sur cette aile. Toutefois, il doit être noté que l'invention n'est limitée à aucun de ces deux domaines, son application étant possible dans tous les cas où l'on doit pouvoir disposer d'une impulsion mécanique de forte énergie susceptible d'être imprimée à un organe mécanique.

Le document FR 2 876 796 décrit un dispositif du genre indiqué ci-dessus appliqué au premier domaine technique évoqué ci-dessus. Dans ce cas, il s'agit de provoquer une collision violente entre deux échantillons de matériau que l'on souhaite étudier. L'un de modes de réalisation du dispositif décrit dans ce document comporte pour chaque échantillon une bobine cylindrique dans la cavité cylindrique de laquelle coulisse axialement un piston en un matériau conducteur de l'électricité formant un équipage mobile avec l'échantillon concerné. Les bobines cylindriques sont connectées électriquement dans un circuit comprenant un condensateur de haute capacité énergétique et un interrupteur qui au moment souhaité permet de décharger la capacité dans les bobines afin d'y créer un courant qui permet d'induire des courants de Foucault dans le piston. De ce fait, il se crée entre chaque bobine et le piston concerné une force répulsive qui projette l'échantillon correspondant vers l'autre échantillon de manière à créer la collision souhaitée.

Il est indiqué dans le document précité que le mode de réalisation analysé ci-dessus, qui comporte donc des bobines de forme cylindrique avec des pistons qui coulissent dans leur cavité centrale, permet d'obtenir une distance d'accélération la plus élevée parmi celles pouvant être atteintes avec les divers modes de réalisation décrits. Cependant, dans certaines applications, même cette distance d'accélération élevée n'est pas suffisante et il en est ainsi notamment dans celle évoquée ci-dessus dans le domaine de l'avionique.

Il s'avère également que dans ce domaine d'application particulier, la puissance de répulsion entre le dispositif et l'organe à mettre en mouvement n'est pas non plus assez forte en raison notamment des masses élevées qu'il s'agit de soumettre à l'impulsion cinétique.

L'invention a donc pour but de créer un dispositif du genre indiqué ci-dessus qui permette d'obtenir une distance d'accélération et une puissance de répulsion plus élevées qu'il n'est possible d'atteindre avec le dispositif décrit dans le document antérieur précité.

L'invention a donc pour objet un dispositif moteur destiné à appliquer une impulsion de mouvement à haute énergie magnétique à un organe mécanique afin d'appliquer une accélération à ce dernier comprenant :

une monture, au moins une bobine électromagnétique fixée dans cette monture et présentant un axe de révolution et un passage central centré sur cet axe, un piston présentant au moins une partie faite en un matériau ayant une susceptibilité paramagnétique, ledit piston étant monté coulissant dans ledit passage et placé en contact dudit organe mécanique lorsque ledit dispositif moteur est à l'état de repos, et des moyens d'alimentation électrique de ladite bobine agencée pour stocker de l'énergie électrique et pour libérer brusquement cette énergie dans ladite bobine et appliquer ainsi l'impulsion de mouvement à haute énergie magnétique audit organe mécanique,

**caractérisé**

**en ce que** ledit piston comporte un empilement de blocs d'une forme périphérique adaptée à celle dudit passage, lesdits blocs dans ledit empilement étant faits alternativement dudit matériau à susceptibilité paramagnétique et d'un matériau isolant ; et

en ce que lesdits moyens d'alimentation électrique sont agencés pour permettre l'application à ladite bobine de ladite énergie sous la forme d'une succession d'impulsions électriques apparaissant en au fur et à mesure du mouvement dudit piston.

Grâce à ces caractéristiques, le dispositif moteur présente un comportement de moteur pas-à-pas, la puissance de l'accélération de l'objet à mettre en mouvement pouvant être obtenue par le cumul de l'énergie de mouvement obtenu à chaque pas par la libération de l'énergie électrique dans la bobine. On obtient ainsi la possibilité de créer une impulsion de mouvement de grande puissance avec une accélération importante.

Selon d'autres caractéristiques avantageuses de l'invention :

- le matériau à susceptibilité paramagnétique est de type conducteur de l'électricité ;
- un organe de poussée, par exemple sous forme d'un plateau, est solidaire dudit empilement de blocs en étant interposé entre ledit empilement et ledit organe mécanique lorsque ledit dispositif moteur est en position de repos ;
- il comporte un moyen de rappel pour ramener ledit piston dans sa position initiale après achèvement de l'impulsion de mouvement appliquée audit organe mécanique ;
- ledit moyen de rappel peut comprendre un élément de rappel élastique formé par au moins un ressort tendu entre ladite monture et l'extrémité arrière dudit piston ;

- en variante, ledit moyen de rappel peut également comprendre une plaque en un matériau ferromagnétique fixée à l'extrémité arrière dudit piston et une bobine électromagnétique prévue sur ladite monture et destinée, lorsqu'elle est excitée, à attirer ladite plaque pour ramener le piston dans sa position initiale ;
- en variante, il peut également comporter au moins deux bobines électromagnétiques alignées axialement sur ledit axe et traversées par ledit piston et lesdits moyens d'alimentation électrique peuvent comprendre pour chacune desdites bobines une section d'alimentation agencée pour stocker de l'énergie électrique et pour libérer brusquement cette énergie dans la bobine associée, les impulsions électriques étant appliquées par lesdites sections dans un ordre de succession prédéterminé ;
- lesdites bobines sont superposées l'une à l'autre ou écartées l'une de l'autre d'une distance correspondant à au moins une hauteur desdits blocs ;
- lesdits moyens d'alimentation électrique comprennent au moins un condensateur pour le stockage de ladite énergie électrique et des moyens de commande semi-conducteurs pour libérer cette énergie au moment opportun du processus d'éjection.

L'invention a également pour objet, en tant qu'application de l'invention, un dispositif d'éjection pour emport d'aéronef comportant un dispositif moteur tel que défini ci-dessus et dont, préalablement à l'envol de l'emport à partir dudit aéronef, le piston est au contact dudit emport formant ainsi ledit objet mécanique afin de subir l'impulsion de mouvement de haute énergie, lesdits moyens d'alimentation électrique étant connectés aux systèmes de gestion d'emport dudit aéronef pour être déclenchés au moment où l'envol de l'emport doit être initié.

L'invention est décrite de façon plus détaillée à propos d'exemples de réalisation et en se référant aux dessins.

la figure 1 est une vue schématique en coupe d'un dispositif moteur selon l'invention ;
la figure 1A est une vue partielle d'une variante de ce dispositif moteur ;
la figure 2 représente schématiquement une application du dispositif moteur selon l'invention à un dispositif d'éjection d'emport d'un aéronef ;
les figures 3 à 6 montrent le fonctionnement de quatre variantes du dispositif moteur selon l'invention ; et
la figure 7 est un schéma fonctionnel illustrant la conception d'un circuit d'alimentation du dispositif moteur.

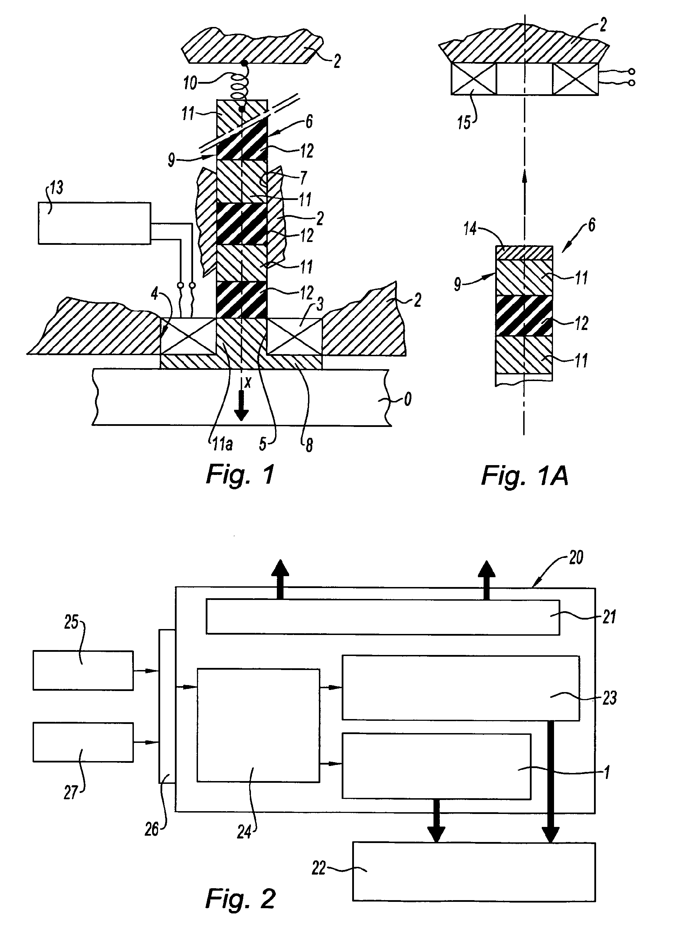

La figure 1 représente de façon simplifiée un mode de réalisation préféré d'un dispositif moteur 1 selon l'invention. Ce dispositif moteur 1 est conçu pour agir comme un accélérateur électromagnétique pour engendrer une impulsion de mouvement à haute énergie magnétique et à appliquer cette impulsion à un organe mécanique O. Ce dernier peut être de forme et de nature quelconque par exemple une barre, un plateau etc. et ses caractéristiques sont indépendantes de celles de l'invention, pourvu naturellement que la quantité de mouvement engendrée par le dispositif moteur soit suffisante pour pouvoir assurer le déplacement que l'on souhaite conférer à l'organe mécanique O, compte tenu notamment de l'inertie de ce dernier.

Le dispositif moteur 1 comprend une monture 2 représentée schématiquement et fractionnée. La forme de cette monture peut également être quelconque et dépend de l'environnement dans lequel le dispositif moteur 1 est utilisé. Elle est notamment agencée pour loger une bobine électromagnétique 3 disposée dans un alésage cylindrique 4 d'axe X-X qui y est ménagé. La bobine 3 est de forme cylindrique avec une section qui est de préférence rectangulaire et dimensionnée selon les caractéristiques décrites par Brooks connues des spécialistes afin d'optimiser le rapport entre le courant I envoyé dans la bobine et la force F engendrée (réduction maximale des pertes par résistivité).

La bobine 3 délimite ainsi un passage cylindrique de coulissement 5 pour un piston mobile 6, le passage cylindrique étant prolongé en 7 grâce à la forme d'une partie de la monture 2 afin de convenablement guider le piston au cours de ses mouvements.

Le piston mobile 6 comporte de préférence un élément de poussée 8 formant la tête du piston et une queue 9. Dans le mode de réalisation représenté ici, l'élément de poussée 8 se présente sous la forme d'un plateau par exemple de forme rectangulaire. D'une façon générale, l'élément de poussée aura une forme adaptée à celle de l'organe mécanique O devant recevoir l'impulsion de mouvement.

Dans la position de repos de l'ensemble, ce plateau 8 est appliqué contre la face frontale de la bobine 3 sous l'action d'un moyen de rappel du piston 6. Dans la variante décrite, ce moyen de rappel est de type élastique tel qu'au moins un ressort 10 attaché entre l'extrémité arrière de la queue 9 du piston 6 et une partie appropriée de la monture 2. Cependant, cette conception du moyen de rappel n'est pas limitative de l'invention.

La queue 9 du piston mobile 6 est composée d'un empilement de blocs alternés de dimensions de préférence identiques entre elles et à celle du passage central 5 délimité par la bobine 3. Un premier 11 de ces blocs est solidaire de l'élément de poussée 8, voire de préférence réalisé d'une seule pièce avec ce dernier, en un matériau présentant une susceptibilité paramagnétique. Dans le cas représenté, ce matériau est conducteur de l'électricité par exemple métallique tel que l'aluminium, l'aluminium dur, le DURAL, le ZICRAL ou le magnésium.

Le premier bloc 11 est solidaire à son tour d'un second bloc 12 en un matériau isolant par exemple en fibres de verre ou en une matière plastique telle que le DELERIN, le PVC, ou la fibre de verre. Suivent ensuite d'autres blocs 11 et 12, alternativement conducteurs et isolants jusqu'à l'extrémité de la queue 9 opposée à l'élément de poussée ou plateau 8. Le nombre de blocs alternés est choisi en fonction de la durée et de la puissance de l'accélération que l'on souhaite imposer à l'organe mécanique 0.

La bobine 3 est alimentée en énergie électrique par un dispositif 13 d'alimentation qui peut engendrer des impulsions à haute énergie d'une durée et à une cadence adéquates pour engendrer l'accélération à conférer à l'organe mécanique O. Un mode de réalisation avantageux d'un tel dispositif d'alimentation sera décrit plus loin.

La figure 1A représente une variante du dispositif moteur 1 que l'on vient de décrire. Il en diffère par le moyen de rappel du piston 6. Dans cette variante, celui-ci comporte en supplément une plaque ferromagnétique 14 fixée à l'extrémité arrière de la queue 9. Une bobine électromagnétique de rappel 15 est fixée à la monture 2. Celle-ci sera excitée par l'intermédiaire d'un moyen de commande prévu dans le circuit d'alimentation 13 lorsque, après une course d'accélération, le piston 6 doit être replacé dans sa position initiale.

Le dispositif moteur 1 selon l'invention fonctionne grâce à la force répulsive engendrée par l'impulsion d'excitation électrique appliquée à la bobine 3 induisant dans les parties conductrices 8 et 11 du piston des courants de Foucault. Cette force est proportionnelle à l'intensité du courant passant dans la bobine 3 conformément à la formule :

$$F_{(t)} = KI^2_{(t)}$$

dans laquelle

F    Force d'expulsion
K    Constante
I    Intensité de l'impulsion de courant dans la bobine 3.

En pilotant ce courant en durée et en intensité au cours de chaque impulsion appliquée, on peut déterminer l'accélération et la longueur de la course d'éjection.

Le début de la course est assuré essentiellement par la force engendrée d'abord dans la plaque 8 puis progressivement dans le premier bloc conducteur 11. Cette force est transmise à l'objet O à déplacer. Des impulsions d'excitation successives sont alors appliquées à la bobine 3 à une cadence prédéterminée, par exemple pendant chaque passage d'un bloc isolant dans la bobine. Lorsque le piston 6 atteint sa fin de course, la bobine 3 est désactivée et le piston 6 est rappelé dans sa position initiale, soit par le moyen élastique de rappel 10 (figure 1), soit par excitation de la bobine 15 agissant sur la plaque ferromagnétique 14 (figure 1A).

La figure 2 représente schématiquement une application particulièrement avantageuse de l'invention. On a représenté un système éjecteur d'une charge ou emport destiné à être emporté par un aéronef, telle qu'un missile, une bombe, un réservoir de carburant ou analogue. Ce système est symbolisé par le rectangle 20. De façon connue en soi, un tel système est fixé à un pylône situé sous l'aile de l'aéronef par l'intermédiaire d'une interface mécanique 21. La charge 22 est fixée au système éjecteur 20 par l'intermédiaire d'un mécanisme 23 comprenant des crochets effaçables coopérant avec des anneaux de support présents sur la charge 22.

De façon également connue en soi, pour permettre l'envol de la charge sans turbulences vis-à-vis de l'aéronef, il est souhaitable qu'au moment de son lancement, une forte impulsion de mouvement lui soit appliquée pour la séparer brusquement de son support. Pour ce faire, il est connu d'utiliser des mécanismes d'éjection soit pyrotechniques, soit pneumatiques. Ces mécanismes présentent certes des avantages, mais ils sont entachés d'inconvénients dont il serait souhaitable de s'affranchir. En particulier, ils sont relativement lourds et nécessitent une logistique complexe (remplacement de cartouches explosives ou de bouteilles de gaz comprimés par exemple). Il s'est avéré qu'un éjecteur équipé d'un dispositif moteur selon la présente invention répond de façon remarquable à ce souhait et simplifie notablement la logistique, puisqu'il n'utilise aucun produit consommable.

C'est pourquoi le système éjecteur de la figure 2 comprend un tel dispositif moteur représenté ici symboliquement par le rectangle 1. La bobine 3 de ce dispositif moteur est connectée à des moyens d'alimentation électrique 24 reliés à leur tour au système électrique de bord 25 de l'aéronef par un connecteur 26 qui transmet également le signal de commande d'éjection provenant des systèmes de bord 27 gérant l'utilisation des emports de l'aéronef.

D'après la description qui précède, on voit que le dispositif moteur 1 selon l'invention se comporte comme un moteur linéaire pas à pas, le piston pouvant être déplacé dans les deux sens selon l'axe X-X en fonction de la commande électrique de la bobine 3 et/ou du moyen de rappel 10 ou 14, 15.

On va maintenant décrire quatre modes de réalisation particuliers du dispositif moteur selon l'invention dans lesquels on prévoit au moins une bobine, le ou les courants circulant dans les bobines étant commandés selon une séquence particulière dans chaque cas.

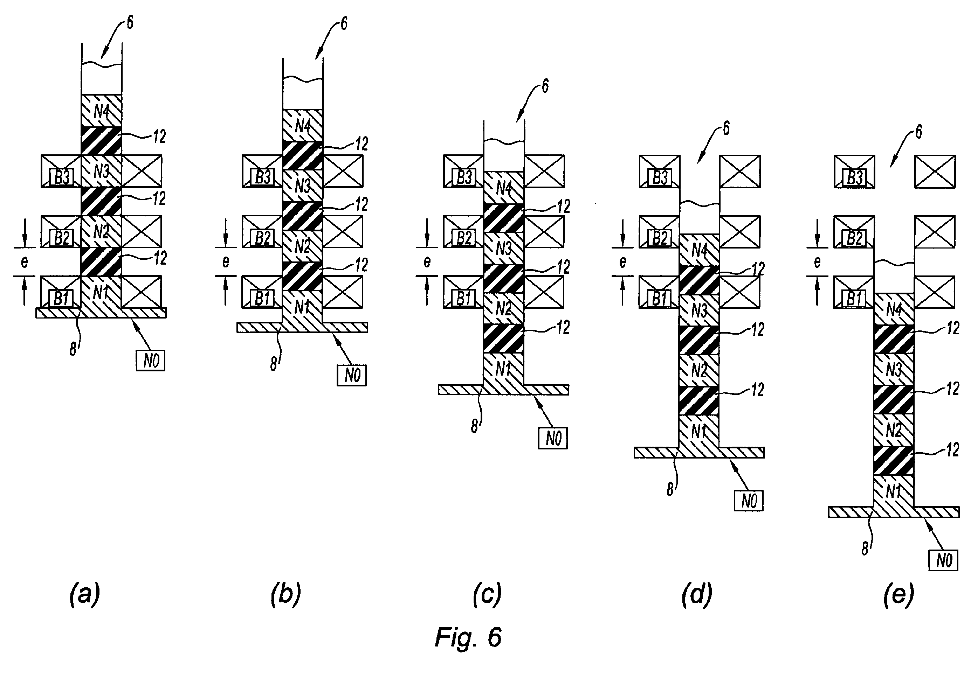

Il convient de noter que ces modes de réalisation ne sont que des exemples des nombreuses possibilités offertes au concepteur dans le cadre de l'invention pour réaliser un dispositif moteur convenant aux exigences particulières de l'application envisagée. Dans le cadre de l'application à l'expulsion d'une charge d'un aéronef, il s'est avéré toutefois que le mode de réalisation de la figure 6 avec sa séquence de commande de courant associée est particulièrement avantageux.

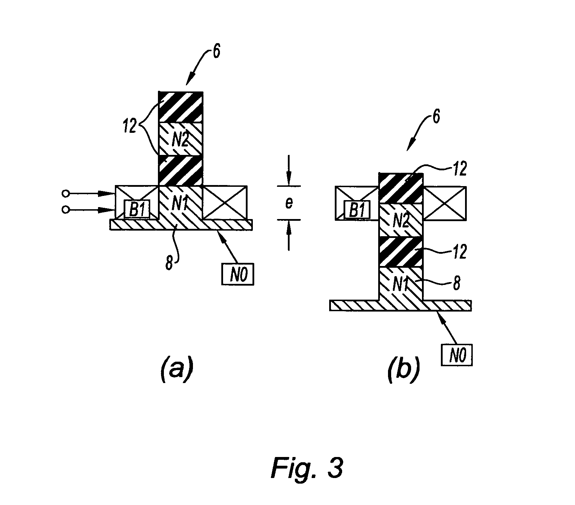

Pour faciliter la compréhension du fonctionnement des dispositifs moteurs des figures 3 à 6, on a adopté une désignation des blocs conducteurs 11 par la lettre N (pour noyau) suivi de son numéro d'ordre dans le piston 6 concerné compté à partir de l'élément de poussée 8. Ce dernier est désigné chaque fois par la référence N0.

Les bobines 3 sont désignées par un B suivi de leur numéro d'ordre dans l'empilement qu'elles constituent, le cas échéant, dans le dispositif moteur 1, celle désignée par B1 étant la plus proche de l'élément de poussée 8. Les blocs isolants n'ont pas été référencés autrement que par leur référence numérique 12 déjà utilisée dans la description des figures 1 et 1A.

Par ailleurs, par convention, on admettra qu'à chaque fois qu'une bobine est excitée au moyen d'une impulsion de courant, le piston 6 se déplace d'une distance qui égale à ou qui est un multiple de la moitié de la hauteur e d'une bobine.

Ainsi, conformément à la figure 3, le dispositif moteur 1 comprend deux blocs ou noyaux N1 et N2, deux blocs isolants 12 et une seule bobine d'éjection B1. Cette dernière est placée dans une position adjacente à l'élément de poussée 8 ou NO, lorsque le dispositif moteur 1 est au repos.

La commande de ce dispositif moteur 1 est réalisée en 2 phases successives 1 et 2 au cours desquelles le piston 6 fait deux pas, la phase 1 correspondant à un pas de 2,5e et la phase 2 correspondant à un pas de 0,5e. Pendant chacune des phases 1 et 2 une impulsion de courant est appliquée à la bobine B1. La figure 3 représente respectivement en a) et b) la position de repos du dispositif moteur 1 et la position finale après le déroulement des deux phases. Le tableau 1 ci-dessus répertorie les opérations qui se déroulent pendant toutes les phases.

*Tableau 1*

| Phase | B1 | Course |
|---|---|---|
| a | N0+N1 | 2,5e |
| b | N2 | 0,5e |
| Chemin d'accélération | | 3e |

Lorsque la phase 2 est achevée, le dispositif moteur 1 ainsi commandé aura effectué deux pas d'éjection pour une course totale de 3e. Comme déjà indiqué, la puissance et l'accélération d'éjection dépendant essentiellement de la valeur et de la forme de l'impulsion de courant appliquée à chaque bobine pendant la phase concernée.

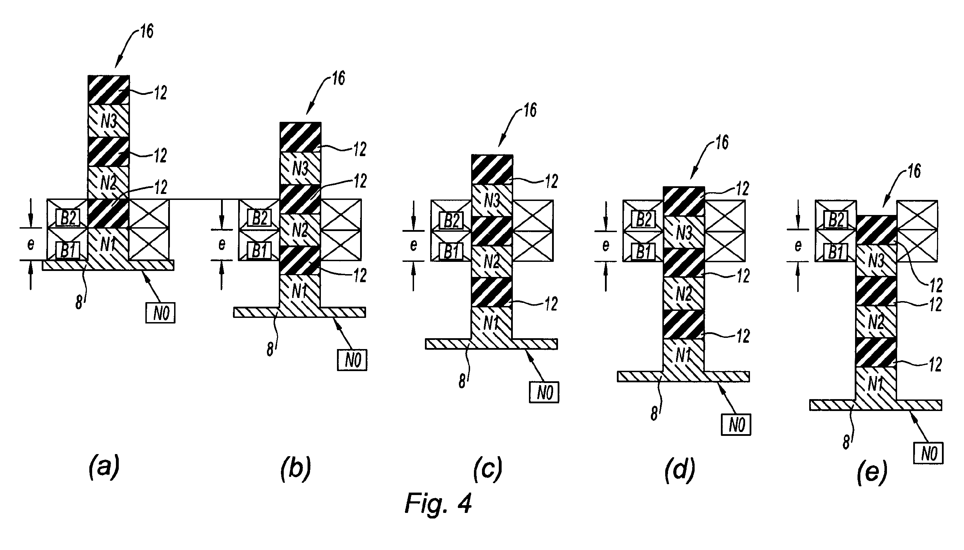

Dans le mode de réalisation de la figure 4, le dispositif moteur 1 comporte deux bobines B1 et B2, placées l'une sur l'autre, tandis que le piston 6 comporte trois blocs conducteurs N1 à N3 alternés avec trois blocs isolants 12. Dans ce cas, la course totale du dispositif moteur est de 5e parcourue en cinq phases dont la première fait progresser le piston 6 d'une distance de 1,5e. On peut ainsi dresser le tableau suivant pour la séquence de commande des bobines B1 et B2.

*Tableau 2*

| Phase | B1 | B2 | Course |
|---|---|---|---|
| a | N0+N1 | | 1,5 |
| b | | N2 | e |
| c | N2 | | e |
| d | | N3 | e |
| e | N3 | | 0,5 |
| Chemin d'accélération | | | 5e |

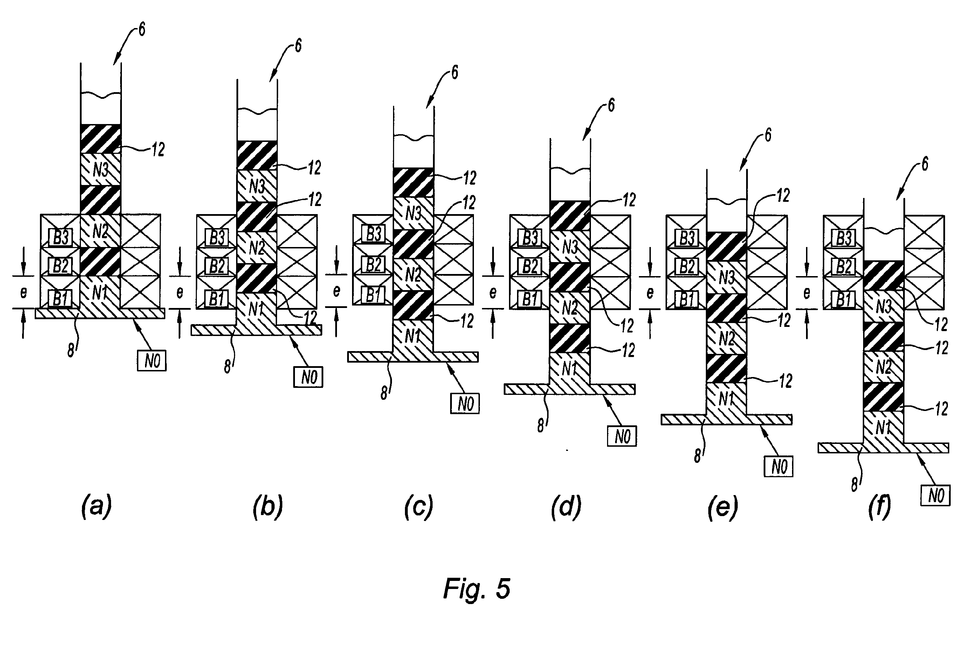

Dans le mode de réalisation de la figure 5, le dispositif moteur 1 comporte trois bobines B1, B2 et B3, empilées les unes sur les autres, tandis que le piston 6 comporte trois blocs conducteurs N1 à N3 alternés avec trois blocs isolants 12. Dans ce cas, la course totale du dispositif moteur est de 5,5e parcourue en six phases dont la première fait progresser le piston 6 d'une distance de 0,5e et les autres phases de e. On peut ainsi dresser le tableau suivant pour la séquence de commande des bobines B1 et B2 à B3.

*Tableau 3*

| Phase | B1 | B2 | B3 | Course |
|---|---|---|---|---|
| a | N0+N1 | | | 0,5 |
| b | N1 | | N2 | e |
| c | | N2 | | e |
| d | N2 | | N3 | e |
| e | | N3 | | e |
| f | N3 | | | e |
| Chemin d'accélération | | | | 5,5e |

Comme indiqué schématiquement sur la figure 5, la longueur du piston 6 peut être augmentée avec une alternance de blocs paramagnétiques et isolants, ce qui permet d'accroître d'autant sa course. Il faut alors ajouter des phases de commande des bobines B1 à B3 permettant chacune de faire progresser le piston 6 d'un pas de longueur e.

Dans certains cas, afin de rendre optimal le rendement de l'intensité du courant dans les bobines par la force de répulsion obtenue, il peut être utile d'espacer les bobines les unes des autres, par exemple en intercalant entre elles des entretoises neutres du point de vue magnétique (non représentées sur les figures) ou en les espaçant les unes des autres d'une distance prédéterminée, égale par exemple à deux fois leur hauteur.

Un mode de réalisation répondant à cet objectif est représenté sur la figure 6. Dans ce cas, la course totale sera également de 8,5e, cependant que le piston 6 doit ici comporter quatre blocs conducteurs N1 à N4 et trois blocs isolants 12. La séquence de commande de ce mode de réalisation résulte du tableau suivant :

*Tableau 4*

| Phase | B1 | B2 | B3 | Course |
|-------|------|------|------|--------|
| a | N0+N1 | | | 0,5e |
| b | N1 | N2 | N3 | 2e |
| c | N2 | N3 | N4 | 2e |
| d | N3 | N4 | | 2e |
| e | N4 | | | 2e |
| Course d'accélération | | | | 8,5 |

Comme on peut le constater, la course est parcourue moyennant cinq phases de commande des bobines. Dans ce cas également, moyennant un allongement du piston 6 avec des blocs alternativement paramagnétiques et isolants, on peut allonger la course d'accélération.

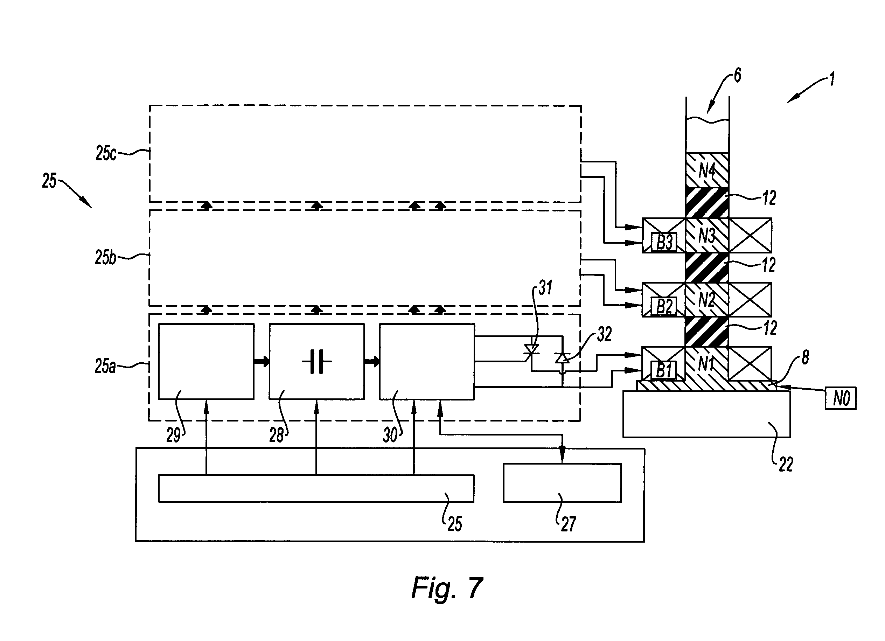

La figure 7 représente plus en détail les moyens d'alimentation 25 de la figure 2 dans le cas où on utilise la configuration à trois bobines conformément à la figure 6.

On reconnaît sur la figure 7 les bobines B1, B2 et B3 et le piston 6 du dispositif moteur 1 de la figure 6, ainsi que le système d'alimentation électrique de bord 25 et celui 27 assurant la gestion de l'emport déjà représentés sur la figure 2.

Les moyens d'alimentation 25 comportent trois sections 25a à 25c identiques associées respectivement à chacune des bobines B1, B2 et B3. Si le dispositif moteur 1 comprend un nombre de bobines d'éjection différent de trois, on prévoira un nombre de sections d'alimentation égal au nombre de bobines utilisées.

Chaque section 25a à 25c comprend un condensateur de stockage d'énergie 28, un circuit 29 de charge de ce condensateur, un circuit de commande 30 de la bobine associée, un commutateur semi-conducteur de puissance 31 piloté par le circuit de commande 30 et une diode anti-retour 32. Les composants 30, 31 et 33 sont alimentés et gérés par les systèmes 27 de l'aéronef.

Si le dispositif moteur comprend une plaque magnétique de retour, comme représenté en 14 sur la figure 1A, une section d'alimentation supplémentaire (non représentée) similaire aux sections 25a à 25c sera prévue avec des caractéristiques adaptée à la bobine 15.

Il est à noter que selon une variante de l'invention, on peut également rappeler le piston 6 dans sa position initiale par une commande appropriée inverse de celles décrites dans les tableaux présentés ci-dessus.

**Revendications**

1. Dispositif moteur (1) destiné à appliquer une impulsion de mouvement à haute énergie magnétique à un organe mécanique (O) afin d'appliquer une accélération à ce dernier comprenant :

   une monture (2), au moins une bobine électromagnétique (3) fixée dans cette monture et présentant un axe de révolution (X-X) et un passage central (5) centré sur cet axe, un piston (6) ayant au moins une partie faite en un matériau présentant une susceptibilité paramagnétique, ledit piston (6) étant monté coulissant dans ledit passage (5) et placé en contact dudit organe mécanique (O) lorsque ledit dispositif moteur (1) est à l'état de repos, et
   des moyens d'alimentation électrique (24, 25) de ladite bobine (3) agencés pour stocker de l'énergie électrique et pour libérer brusquement cette énergie dans ladite bobine et appliquer ainsi l'impulsion de mouvement à haute énergie magnétique audit organe mécanique (O),
   **caractérisé**
   **en ce que** ledit piston (1) comporte un empilement (9) de blocs (11, 12) d'une forme périphérique adaptée à celle dudit passage (5), lesdits blocs (11, 12) dans ledit empilement (9) étant faits alternativement dudit matériau à susceptibilité paramagnétique et d'un matériau isolant ; et
   **en ce que** lesdits moyens d'alimentation électrique (24, 25) sont agencés pour permettre l'application à ladite bobine (3) de ladite énergie sous la forme d'une succession d'impulsions électriques apparaissant en au fur et à mesure du mouvement dudit piston (6).

2. Dispositif moteur (1) selon la revendication 1, **caractérisé en ce que** le matériau à susceptibilité paramagnétique est de type conducteur de l'électricité.

3. Dispositif moteur (1) selon l'une des revendications 1 ou 2, **caractérisé en ce qu'**un organe de poussée, par exemple sous forme d'un plateau (8), est solidaire dudit empilement (9) de blocs (11, 12) en étant interposé entre ledit empilement et ledit organe mécanique (O) lorsque ledit dispositif moteur (1) est en position de repos.

4. Dispositif moteur (1) selon l'une quelconque des revendications 1 à 3, **caractérisé en ce qu'**il comporte un moyen de rappel (10, 14, 15) pour ramener ledit piston (6) dans sa position initiale après achèvement de l'impulsion de mouvement appliquée audit organe mécanique (O).

5. Dispositif moteur (1) selon la revendication 4, **carac-**

**térisé en ce que** ledit moyen de rappel comprend un élément de rappel élastique formé par au moins un ressort (10) tendu entre ladite monture (2) et l'extrémité arrière dudit piston (6).

**6.** Dispositif moteur (1) selon la revendication 4, **caractérisé en ce que** ledit moyen de rappel comprend une plaque (14) en un matériau ferromagnétique fixée à l'extrémité arrière dudit piston et une bobine électromagnétique (15) prévue sur ladite monture (2) et destinée, lorsqu'elle est excitée, à attirer ladite plaque (14) pour ramener le piston (6) dans sa position initiale.

**7.** Dispositif moteur (1) selon l'une quelconque des revendications 1 à 6, **caractérisé en ce qu'**il comporte au moins deux bobines électromagnétiques (3) alignées axialement sur ledit axe (X-X) et traversées par ledit piston (6) et **en ce que** lesdits moyens d'alimentation électrique comprennent pour chacune desdites bobines une section d'alimentation (25a, 25b, 25c) agencée pour stocker de l'énergie électrique et pour libérer brusquement cette énergie dans la bobine associée (3), les impulsions électriques étant appliquées par lesdites sections dans un ordre de succession prédéterminé.

**8.** Dispositif moteur (1) selon la revendication 8, **caractérisé en ce que** lesdites bobines (3) sont superposées l'une à l'autre ou écartées l'une de l'autre d'une distance correspondant à au moins une hauteur desdits blocs (11, 12).

**9.** Dispositif moteur (1) selon l'une quelconque des revendications 1 à 8, **caractérisé en ce que** lesdits moyens d'alimentation électrique (25) comprennent au moins un condensateur (28) pour le stockage de ladite énergie électrique et des moyens de commande semi-conducteurs (31, 32) pour libérer cette énergie au moment opportun du processus d'éjection.

**10.** Dispositif d'éjection pour emport d'aéronef comportant un dispositif moteur (1) selon l'une quelconque des revendications précédentes, dont, préalablement à l'envol de l'emport à partir dudit aéronef, le piston (6) est au contact dudit emport formant ainsi ledit objet mécanique (O) afin de subir l'impulsion de mouvement de haute énergie, et en ce que lesdits moyens d'alimentation électrique (25) sont connectés aux systèmes (27) de gestion d'emport dudit aéronef pour être déclenchés au moment où l'envol de l'emport doit être initié.

**Claims**

**1.** Drive device (1) which is intended to apply a high-energy magnetic movement pulse to a mechanical member (O) in order to apply acceleration thereto, comprising:

a mounting (2), at least one electromagnetic coil (3) which is fixed in this mounting and which has an axis of revolution (X-X) and a central passage (5) which is centred relative to this axis, a piston (6) which has at least a portion made of a material having paramagnetic susceptibility, the piston (6) being mounted in a sliding manner in the passage (5) and placed in contact with the mechanical member (O) when the drive device (1) is in the rest state, and
electrical energy supply means (24, 25) for the coil (3), which means are provided in order to store electrical energy and to abruptly release this energy into the coil and thus apply the high-energy magnetic movement pulse to the mechanical member (0),
**characterised**
**in that** the piston (1) comprises a stack (9) of blocks (11, 12) having a peripheral shape which is adapted to that of the passage (5), the blocks (11, 12) in the stack (9) being made alternately from the material having paramagnetic susceptibility and an insulating material; and
**in that** the electrical energy supply means (24, 25) are provided in order to allow the energy to be applied to the coil (3) in the form of a series of electrical pulses which appear as the piston (6) moves.

**2.** Drive device (1) according to claim 1, **characterised in that** the material having paramagnetic susceptibility is of the electrically conductive type.

**3.** Drive device (1) according to either claim 1 or claim 2, **characterised in that** a pushing member, for example, in the form of a plate (8), is fixedly joined to the stack (9) of blocks (11, 12) and interposed between the stack and the mechanical member (O) when the drive device (1) is in the rest position.

**4.** Drive device (1) according to any one of claims 1 to 3, **characterised in that** it comprises a return means (10, 14, 15) in order to return the piston (6) into the initial position thereof after the movement pulse applied to the mechanical member (O) is complete.

**5.** Drive device (1) according to claim 4, **characterised in that** the return means comprises a resilient return element which is formed by at least one spring (10) which is tensioned between the mounting (2) and the rear end of the piston (6).

**6.** Drive device (1) according to claim 4, **characterised in that** the return means comprises a plate (14) of ferromagnetic material which is fixed to the rear end of the piston and an electromagnetic coil (15) which is provided on the mounting (2) and which is intended, when it is excited, to attract the plate (14) in order to return the piston (6) to its initial position.

7. Drive device (1) according to any one of claims 1 to 6, **characterised in that** it comprises at least two electromagnetic coils (3) which are aligned axially relative to the axis (X-X) and through which the piston (6) extends, and **in that** the electrical energy supply means comprise for each of the coils a supply section (25a, 25b, 25c) which is provided in order to store electrical energy and to abruptly release this energy into the associated coil (3), the electrical pulses being applied by these sections in a predetermined order of sequence.

8. Drive device (1) according to claim 8, **characterised in that** the coils (3) are superimposed one on the other or are spaced-apart from each other by a distance corresponding to at least a height of the blocks (11, 12).

9. Drive device (1) according to any one of claims 1 to 8, **characterised in that** the electrical energy supply means (25) comprise at least one capacitor (28) for storing the electrical energy and semi-conductive control means (31, 32) to release this energy at the correct time during the ejection process.

10. Ejection device for an aircraft load which comprises a drive device (1) according to any one of the preceding claims, and whose piston (6), prior to the take-off of the load from the aircraft, is in contact with the load which thereby forms the mechanical object (O) in order to be subjected to the high-energy movement pulse, and in that the electrical energy supply means (25) are connected to the control systems (27) of the load of the aircraft in order to be triggered at the time when the take-off of the load must be initiated.

**Patentansprüche**

1. Antriebsvorrichtung (1), die dazu bestimmt ist, einen Bewegungsimpuls mit hoher magnetischer Energie an ein mechanisches Organ (O) anzulegen, um an dieses Letztere eine Beschleunigung anzulegen, umfassend:

> einen Aufbau (2), mindestens eine elektromagnetische Spule (3), die in diesem Aufbau befestigt ist und eine Rotationsachse (X-X) und eine zentrale Passage (5), die auf dieser Achse zentriert ist, aufweist, einen Kolben (6), der mindestens einen Teil hat, der aus einem Werkstoff besteht, der eine paramagnetische Empfindlichkeit aufweist, wobei der Kolben (6) in der Passage (5) gleitend montiert und in Berührung mit dem mechanischen Organ (O), wenn die Antriebsvorrichtung (1) im Ruhezustand ist, platziert ist,

Mittel (24, 25) zum Versorgen mit Strom der Spule (3) die eingerichtet sind, um elektrische Energie zu speichern und diese Energie plötzlich in die Spule freizusetzen und **dadurch** den Bewegungsimpuls mit hoher magnetischer Energie an das mechanische Organ (O) anzulegen,

**dadurch gekennzeichnet,**

**dass** der Kolben (1) eine Stapelung (9) von Blöcken (11, 12) mit einer peripheren Form aufweist, die an die der Passage (5) angepasst ist, wobei die Blöcke (11, 12) in der Stapelung (9) abwechselnd aus dem Werkstoff mit paramagnetischer Empfindlichkeit und aus einem isolierenden Werkstoff hergestellt sind; und

**dass** die Mittel (24, 25) zum Versorgen mit Strom eingerichtet sind, um das Anlegen der Energie an die Spule (3) in Form einer Abfolge elektrischer Impulse, die im Laufe der Bewegung des Kolbens (6) erscheinen, zu erlauben.

2. Antriebsvorrichtung (1) nach Anspruch 1, **dadurch gekennzeichnet, dass** der Werkstoff mit paramagnetischer Empfindlichkeit des Typs ist, der Elektrizität leitet.

3. Antriebsvorrichtung (1) nach einem der Ansprüche 1 oder 2, **dadurch gekennzeichnet, dass** ein Schuborgan, zum Beispiel in Form einer Platte (8), fest mit der Stapelung (9) von Blöcken (11, 12) verbunden ist und zwischen die Stapelung und das mechanische Organ (O) eingefügt ist, wenn die Antriebsvorrichtung (1) in Ruhestellung ist.

4. Antriebsvorrichtung (1) nach einem der Ansprüche 1 bis 3, **dadurch gekennzeichnet, dass** sie ein Rückholmittel (10, 14, 15) aufweist, um den Kolben (6) nach dem Vollenden des Bewegungsimpulses, der an das mechanische Organ (O) angelegt wird, in seine ursprüngliche Position zurückzuholen.

5. Antriebsvorrichtung (1) nach Anspruch 4, **dadurch gekennzeichnet, dass** das Rückholmittel ein elastisches Rückholelement aufweist, das aus mindestens einer Feder (10) ausgebildet ist, die zwischen dem Aufbau (2) und dem hinteren Ende des Kolbens (6) gespannt ist.

6. Antriebsvorrichtung (1) nach Anspruch 4, **dadurch gekennzeichnet, dass** das Rückholmittel eine Platte (14) aus einem ferromagnetischen Werkstoff aufweist, die an dem hinteren Ende des Kolbens befestigt ist, und eine elektromagnetische Spule (15), die auf dem Aufbau (2) vorgesehen und dazu bestimmt ist, wenn sie erregt wird, die Platte (14) anzuziehen, um den Kolben (6) in seine ursprüngliche Position zurückzuholen.

**7.** Antriebsvorrichtung (1) nach einem der Ansprüche 1 bis 6, **dadurch gekennzeichnet, dass** sie mindestens zwei elektromagnetische Spulen (3), die axial auf der Achse (X-X) angeordnet sind und von dem Kolben (6) durchquert werden, aufweist, und dass die Mittel zum Versorgen mit Strom für jede der Spulen einen Versorgungsabschnitt (25a, 25b, 25c) aufweisen, der eingerichtet ist, um die elektrische Energie zu speichern und diese Energie plötzlich in die dazugehörende Spule (3) freizusetzen, wobei die elektrischen Impulse von den Abschnitten in einer vorbestimmten Abfolgereihenfolge angelegt werden.

**8.** Antriebsvorrichtung (1) nach Anspruch 8, **dadurch gekennzeichnet, dass** die Spulen (3) übereinander überlagert oder voneinander um eine Entfernung beabstandet sind, die mindestens einer Höhe der Blökke (11, 12) entspricht.

**9.** Antriebsvorrichtung (1) nach einem der Ansprüche 1 bis 8, **dadurch gekennzeichnet, dass** die Mittel zum Versorgen mit Strom (25) mindestens einen Kondensator (28) zum Speichern der elektrischen Energie und Halbleiter-Steuermittel (31, 32) zum Freisetzen dieser Energie in dem geeigneten Augenblick des Auswurfprozesses aufweisen.

**10.** Auswurfvorrichtung für den Träger eines Luftfahrzeugs, die eine Antriebsvorrichtung (1) nach einem der vorhergehenden Ansprüche ausweist, deren Kolben (6) vor dem Abflug des Trägers ausgehend von dem Luftfahrzeug mit dem Träger in Berührung ist und **dadurch** das mechanische Objekt (O) bildet, um dem Bewegungsimpuls mit hoher Energie ausgesetzt zu werden, und dass die Mittel zum Versorgen mit Strom (25) an die Verwaltungssysteme des Trägers des Luftfahrzeugs angeschlossen sind, um in dem Augenblick ausgelöst zu werden, in dem der Abflug des Trägers ausgelöst werden soll.

Fig. 1                    Fig. 1A

Fig. 2

*Fig. 3*

Fig. 4

*Fig. 5*

Fig. 6

*Fig. 7*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2876796